# EUROPÄISCHE PATENTSCHRIFT

(11) **EP 2 662 480 B1**
(45) Veröffentlichungstag und Bekanntmachung des Hinweises auf die Patenterteilung: **01.10.2014**
(21) Anmeldenummer: 12167731.4
(22) Anmeldetag: 11.05.2012
(51) Int. Cl.: B29B 11/16, B29C 70/22, D03D 13/00, D03D 15/00, D03D 19/00

(54) **Textilteil, Verbundwerkstoffelement mit Textilteil und deren Herstellungsverfahren**
Textile section, compound material element with textile section and method for producing same
Pièce textile, élément en matière première composite avec pièce textile et leurs procédés de fabrication

(43) Veröffentlichungstag der Anmeldung: 13.11.2013
(73) Patentinhaber: Groz-Beckert KG, 72458 Albstadt (DE)
(72) Erfinder: Bischoff, Thomas, 72406 Bisingen (DE)
(74) Vertreter: Rüger, Barthelt & Abel

(56) Entgegenhaltungen:
- EP-A1- 0 408 830
- DE-A1-102005 022 567
- US-A- 4 320 160
- US-A- 5 952 067

## Beschreibung

Die Erfindung betrifft ein Textilteil, ein Verbundwerkstoffelement mit einem solchen Textilteil sowie Verfahren zur Herstellung des Textilteils sowie des Verbundwerkstoffelements. Das Textilteil ist zum Einsatz in Verbundwerkstoffen vorgesehen, die auch als Composites bezeichnet werden. Solche textilverstärkten Verbundwerkstoffe sind grundsätzlich bekannt.

In konventionell gewebten Textilteilen entsteht durch die Bindung der Kettfäden mit den Schussfäden eine Fadenwellung, so dass bei der Verwendung des Textilteils in einem Verbundwerkstoffelement eine nicht ideal gestreckte Ausrichtung der Fäden vorliegt. Das zur Verstärkung des Verbundwerkstoffs dienende, eine Textillage bildende Textilteil weist somit gewellte Fäden auf. Die erreichbare Festigkeit des Verbundwerkstoffelements ist deswegen nicht optimal. Knicke, Wellen oder kleine Radien sollten deswegen möglichst vermieden werden.

Durch Vergrößerung der Abstände zwischen den Bindungsstellen kann zwar die Anzahl und Höhe der Wellen im betreffenden Faden verringert werden. Dies bedeutet, dass größere Flottierungen vorgesehen werden, was auch die Drapierfähigkeit des Textilteils erhöht. Allerdings entsteht dadurch bei extrem großen Flottierungen der Nachteil, dass unerwünschte Verschiebungen der Fäden des Texteilteils beim Drapieren und insbesondere beim Formen des Textilteils zu einem dreidimensionalen Verbundwerkstoffkörper entstehen können. Die Fadendichte kann dadurch an einigen Stellen unzureichend klein sein, während sie an anderen Stellen zu groß ist.

Anstelle von Geweben können auch Gelege von Verstärkungsfäden als Textilteil verwendet werden. Bei diesen Gelegen ist es jedoch erforderlich, die Verstärkungsfäden durch ein zusätzliches Mittel miteinander zu fixieren. Nachteilig ist bei solchen Gelegen allerdings, dass sich einige mechanische Laminateigenschaften z.B. senkrecht zur Erstreckungsebene des Textilteils verschlechtern, etwa die Schubeigenschaft, die Lochleibungseigenschaft, die Schlagbeanspruchung oder die schädigungsfreie mechanische Bearbeitbarkeit des Textilteils bzw. des damit hergestellten Verbundwerkstoffelements. Da die typische webtechnische Bindung zwischen den Fäden des Textilteils fehlt, sind die mechanischen Eigenschaften senkrecht zur Erstreckungsebene häufig nicht ausreichend.

Ein weiterer Aspekt bei der Ausgestaltung und der Herstellung und Verarbeitung eines Textilteils, insbesondere der Herstellung eines Verbundwerkstoffelements ist die Drapierfähigkeit bei einem Umformprozess. Dabei können Verbundwerkstoffelemente erhitzt und mechanisch umgeformt werden. Durch Spritzpressen ist es auch möglich, einen sogenannten Vorformling - auch Preform genannt - aus dem in die gewünschte Form gebrachten Textilteil zu bilden und beispielsweise durch Einspritzen von flüssigem Harz unter hohem Druck einen Verbundwerkstoffkörper herzustellen. Beim Umformen eines Verbundwerkstoffelements oder beim Drapieren eines Textilteils ist es unerwünscht, wenn die Fäden oder Fasern unkontrolliert fließen und sich verschieben. Ein Gelege hat bei diesem Verfahren den Vorteil, dass es zwar sehr drapierfähig ist, jedoch besteht bei einem Gelege die Gefahr, dass die Mittel zur Bindung des Geleges nicht ausreichend fest sind und damit die gewünschte Fadendichte in bestimmten Bereichen verloren geht. Auf der anderen Seite sind Gewebe weniger drapierfähig und daher schwerer umzuformen.

Aus US 4 320 160 ist ein Textilteil für Verbundwerkstoffkörper bekannt. Dieses Textilteil weist ein Verstärkungssystem aus aneinander gelegten Verstärkungsfäden auf, die über Bindefäden miteinander verbunden sind. Als Bindefäden werden Bindekettfäden und Bindeschussfäden durch einfache Schussfäden miteinander verbunden oder die Bindekettfäden gehen mit den Verstärkungskettfäden bzw. den Verstärkungsschussfäden eine Bindung ein. Dieses Textilteil hat den Nachteil, dass aufgrund der vorgeschlagenen Bindungsarten die Fadenspannung der Bindefäden klein sein muss, um eine unerwünschte Welligkeit der Verstärkungsfäden zu vermeiden. Dies führt wiederum dazu, dass keine ausreichende Verschiebefestigkeit der Verstärkungsfäden gewährleistet ist. Wird die erforderliche Verschiebefestigkeit erreicht, verursacht die Fadenspannung der Bindefäden zum einen eine Wellung der Verstärkungsfäden und zum anderen besteht die Gefahr, dass die Verstärkungsfäden durch die große Fadenspannung des Bindefadens zwischen den Bindungspunkten gebündelt und einer unerwünschte Struktur mit sehr ungleicher Fadendichte der Verstärkungsfäden entsteht.

Auch die DE 20 2005 014 801 U1 offenbart ein Textilteil mit einem Verstärkungssystem aus Verstärkungsfäden und einem Bindungssystem aus Bindefäden zur Bindung des Verstärkungssystems, was dieselben Nachteile mit sich bringt, die im Zusammenhang mit US 4 320 160 beschrieben wurden.

DE 10 2005 022 567 A1 beschreibt ein textiles Flächengebilde, das bei einem beschriebenen Ausführungsbeispiel sowohl Dreher-, als auch Leinwandbindungen zwischen den Verstärkungsfäden aufweist. Beispielsweise kann immer nach einer vorgegebenen Anzahl von Leinwandbindungen eine Dreherbindung vorgesehen sein.

Ausgehend hiervon kann es als eine Aufgabe der vorliegenden Erfindung angesehen werden, ein Textilteil, ein Verbundwerkstoffelement mit einem solchen Textilteil sowie Herstellungsverfahren zu schaffen, wobei zum einen eine gute Handhabbarkeit bei der Formgebung oder Umformung des Textilteils bzw. des Verbundwerkstoffelements gewährleistet ist und zum anderen eine ausreichende mechanische Stabilität besteht.

Diese Aufgabe wird durch ein Textilteil mit den Merkmalen des Patentanspruches 1, ein Verbundwerkstoffelement mit den Merkmalen des Patentanspruches 11, ein Verfahren zur Herstellung eines Textilteils mit den Merkmalen des Patentanspruches 12 sowie ein Verfahren zur Herstellung eines Verbundwerkstoffelements mit den Merkmalen des Patentanspruches 13 gelöst.

Das erfindungsgemäße Textilteil weist ein Verstärkungssystem aus Verstärkungsschussfäden und Verstärkungskettfäden auf. Ferner ist bei einer erfindungsgemäßen Variante ein Bindungssystem aus Bindeschussfäden und Bindekettfäden vorhanden. Das Verstärkungssystem bildet in wenigstens einem ersten Abschnitt ein Gewebe mit einer herkömmlichen Bindung zwischen den Verstärkungsschussfäden und den Verstärkungskettfäden, beispielsweise eine Leinwandbindung, eine Köperbindung, eine Atlasbindung, eine Dreherbindung oder dergleichen.

Das Textilteil weist außerdem wenigstens einen zweiten Abschnitt auf, in dem die Verstärkungsschussfäden und die Verstärkungskettfäden ohne unmittelbare Bindung aneinander anliegen. In diesem zweiten Abschnitt verlaufen die Verstärkungskettfäden und die Verstärkungsschussfäden gestreckt.

Zur Fixierung der Verstärkungsfäden im zweiten Abschnitt ist dieser bei einer ersten erfindungsgemäßen Variante an mehreren Seiten in Kettfadenrichtung und/oder in Schussfadenrichtung, beispielsweise an zwei in Kettfadenrichtung gegenüberliegenden Seiten oder an zwei in Schussfadenrichtung gegenüberliegenden Seiten, durch einen oder jeweils einen ersten Abschnitt begrenzt und allein dadurch stabi-lisiert oder fixiert. Eine besonders gute Fixierung oder Stabilisierung ist erreicht, wenn dieser zweite Abschnitt ringsum an allen vier Seiten durch einen oder meh-rere erste Abschnitte begrenzt ist.

Bei einer zweiten erfindungsgemäßen Variante, die alternativ oder zusätzlich zu der ersten Variante realisiert werden kann, ist ein Bindungssystem vorhanden. Die Verstärkungsfäden werden durch das Bindungssystem gehalten, indem die Bindeschussfäden und die Bindkettfäden das Verstärkungssystem von entgegengesetzten Seiten einfassen, die an Bindungsstellen miteinander und/oder mit dem Verstärkungssystem eine Bindung herstellen.

Sowohl der erste als auch der zweite Abschnitt weisen vorzugsweise jeweils mehrere nebeneinander angeordnete Verstärkungskettfäden und jeweils mehrere nebeneinander angeordnete Verstärkungsschussfäden auf, so dass beide Abschnitte flächig ausgestaltet sind.

Durch die erfindungsgemäße Ausgestaltung des Textilteils entstehen Bereiche mit großer Drapierfähigkeit, in denen die Verstärkungsfäden des Verstärkungssystems ein Gelege bilden und durch die angrenzenden ersten Abschnitte des Textilteils und/oder durch das Bindungssystem gegen unerwünschte Verschiebungen gesichert werden. Das Gelege von Verstärkungsfäden in dem wenigstens eine zweiten Abschnitt und das Gewebe von Verstärkungsfäden in dem wenigstens einen ersten Abschnitt sind beim unverformten Textilteil in einer Erstreckungsebene nebeneinander angeordnet. Die Erstreckungsebene ist durch die Kettfadenrichtung und die Schussfadenrichtung definiert.

Vorzugsweise sind die Bindungsstellen des Bindungssystems, sofern es vorhanden ist, zumindest in diesem zweiten Abschnitt durch eine Dreherbindung gebildet, beispielsweise eine Halbdreherbindung oder eine Volldreherbindung. In dem wenigstens einen ersten Abschnitt des Textilteils stehen die Verstärkungsfäden des Verstärkungssystems unmittelbar miteinander in einer webtechnischen Bindung und bilden ein Gewebe. In diesem ersten Abschnitt sind die Verstärkungsfäden gut gegen ein Verschieben gesichert und das Textilteil weist auch eine hohe mechanische Stabilität senkrecht zur Textilteilebene auf. Die Bindeschussfäden sowie die Bindekettfäden können in diesem ersten Abschnitt beispielsweise ohne Seitenwechsel auf einer Seite des Verstärkungssystems verlaufen. Alternativ kann das Bindungssystem das Verstärkungssystem im ersten Abschnitt zusätzlich einfassen und fixieren.

Dieses erfindungsgemäße Textilteil eignet sich besonders zur Herstellung von insbesondere plattenförmigen Verbundwerkstoffelementen oder dreidimensional geformten Verbundwerkstoffkörpern. Ein solches Verbundwerkstoffelement bzw. ein solcher Verbundwerkstoffkörper weist angepasst an die Verwendung im Bereich der ersten Abschnitte des Textilteils eine sehr hohe mechanische Festigkeit auch senkrecht zur Fläche des Verbundwerkstoffelements auf. In dem wenigstens einen Bereich, in denen der Verbundwerkstoff umgeformt werden soll oder umgeformt ist, ist der wenigstens eine zweite Abschnitt des Textilteils angeordnet. Die hohe Drapierfähigkeit in diesem Bereich erlaubt eine einfache Umformbarkeit. Das Verstärkungssystem kann in diesem zweiten Abschnitt durch das Bindungssystem gegen Verrutschen der Verstärkungsfäden gesichert sein. Zusätzlich oder alternativ kann das Textilteil mehrere diesen zweiten Abschnitt umgebende erste Abschnitte aufweisen. Dadurch kann eine zusätzliche Einschränkung der Verschiebung der Verstärkungsfäden im zweiten Bereich erreicht werden. Die Verstärkungsfäden im zweiten Bereich sind mithin durch das Bindungssystem und/oder durch die Gewebebildung der Verstärkungsfäden in dem angrenzenden ersten Abschnitt gesichert. Das Textilteil lässt sich einfach durch das Positionieren des wenigstens einen ersten Abschnitts und des wenigstens einen zweiten Abschnitts an die Anforderungen im Verbundwerkstoff anpassen.

Vorzugsweise sind in dem zweiten Abschnitt Bindungsstellen vorhanden, an denen zwei unmittelbar benachbarte Kettfäden, beispielsweise zwei Bindekettfäden oder ein Bindekettfaden und ein Verstärkungskettfaden ein Kettfadenpaar aus einem Steherkettfaden und einem Dreherkettfaden bilden. Der Steherkettfaden und der Drehkettfaden kreuzen sich beispielsgemäß mehrfach und schließen einen Bindeschussfaden an der Bindungsstelle ein. Durch eine solche Voll- oder Halbdreherbindung werden die Verstärkungsfäden im zweiten Abschnitt besonders gut gegen ein versehentliches Verschieben beim Drapieren bzw. Umformen des Textilteils bzw. des Verbundwerkstoffelements gesichert.

Vorzugsweise sind die Bindefäden, also die Bindekettfäden sowie die Bindeschussfäden, in dem wenigstens einen ersten Abschnitt nur auf einer Seite des Verstärkungssystems angeordnet, so dass sie das Verstärkungssystem nicht einfassen sondern von einer Seite her am Verstärkungssystem anliegen. Die Bindeschussfäden können stets nur auf einer Seite des Verstärkungssystems verlaufen oder beim Übergang von einem ersten Abschnitt zu einem zweiten Abschnitt die Seite wechseln.

Es ist von Vorteil, wenn bei einer Dreherbindung im Bindungssystem die wenigstens eine Kreuzungsstelle zwischen dem Kettfadenpaar aus Steherkettfaden und Dreherkettfaden im zweiten Abschnitt des Textilteils unmittelbar an der Bindungsstelle mit dem Bindeschussfaden liegen. Da an der Bindungsstelle die Fäden des Bindungssystems zwischen den Fäden des Verstärkungssystems hindurch greifen, also das Verstärkungssystem sozusagen durchsetzen, kann der dort ohnehin notwendige Abstand zwischen den benachbarten Verstärkungskettfäden bzw. den benachbarten Verstärkungsschussfäden genutzt werden, um an dieser Stelle die wenigstens eine Überkreuzungsstelle des Steherkettfadens mit dem Drehkettfaden vorzusehen.

Die Bindekettfäden verlaufen vorzugsweise kreuzungsfrei gegenüber den Verstärkungskettfäden. Alle Kettfäden verlaufen mithin parallel in einer Kettfadenrichtung. Die Bindeschussfäden verlaufen vorzugsweise kreuzungsfrei gegenüber den Verstärkungsschussfäden. Alle Schussfäden verlaufen mithin parallel in einer Schussfadenrichtung, die in etwa rechtwinklig zur Kettfadenrichtung orientiert ist. Daher kann das Textilteil sehr einfach auf einer herkömmlichen Webmaschine oder eine Jacquard-Webmaschine hergestellt werden.

Bei einer bevorzugten Ausgestaltung des Textilteils ist die Anzahl der Kreuzungsstellen in dem wenigstens einen zweiten Abschnitt zwischen den Verstärkungskettfäden und den Verstärkungsschussfäden gleich groß oder größer als die Anzahl der Bindungsstellen des Bindungssystems in diesem wenigstens einen zweiten Abschnitt. Die Anzahl der Schussfäden pro Längeneinheit (Fadendichte) kann bei einem Ausführungsbeispiel zumindest in dem wenigstens einen zweiten Abschnitt für die Bindeschussfäden kleiner sein als für die Verstärkungsschussfäden. Bei der Verwendung einer Dreherbindung für das Bindungssystem kann die Anzahl der Bindekettfadenpaare aus Steherkettfaden und Drehkettfaden pro Längeneinheit maximal so groß sein, wie die Anzahl der Verstärkungskettfäden. Der Abstand der Bindungsstellen im Bindungssystem kann in Kettfadenrichtung und in Schussfadenrichtung unterschiedlich groß gewählt werden. Der Abstand der Bindungsstellen kann sowohl in Kettfadenrichtung, als auch in Schussfadenrichtung variieren, so dass sich Zonen mit dichter angeordneten Bindungsstellen und Zonen mit weniger dicht angeordneten Bindungsstellen bilden und daher die Verschiebungsfestigkeit der Verstärkungsfäden innerhalb des wenigstens einen zweiten Abschnitts von Zone zu Zone variiert. Wird eine höhere Drapierfähigkeit des wenigstens einen zweiten Abschnitts gewünscht, so kann die Größe bzw. Länge der Flottierung im Bindungssystem entsprechend vergrößert werden.

Für die Verstärkungsschussfäden und die Verstärkungskettfäden wird insbesondere ein Verstärkungsgarn gewählt, dass sich vom Bindegarn, aus dem die Bindekettfäden und die Bindeschussfäden gemacht sind, unterscheidet. Für die mechanische Steifigkeit oder Festigkeit des Verbundwerkstoffelements, das mit Hilfe des Textilteils hergestellt ist, sind hauptsächlich die Verstärkungsfäden des Verstärkungssystems verantwortlich. Das Verstärkungsgarn kann beispielsweise Karbonfaser und/oder Aramidfasern und/oder Glasfasern aufweisen. Bei einem Ausführungsbeispiel können die Verstärkungsfäden einen Flachquerschnitt haben, dessen Breite in der Erstreckungsebene des Textilteils größer ist als des in Höhe quer zur Erstreckungsebene des Textilteils. Im Unterschied dazu kann der Querschnitt des Bindegarns vorzugsweise kreisrund gewählt werden. Der Titer oder der Querschnitt des Bindegarns ist insbesondere kleiner als der Titer oder der Querschnitt des Verstärkungsgarns. Der Titer des Verstärkungsgarns beträgt vorzugsweise mindestens 500 dtex. Der Titer des Bindegarns ist vorzugsweise kleiner als 500 dtex, insbesondere maximal 100 dtex und weiter vorzugsweise maximal 50 dtex. Dadurch lässt sich der Massenteil des Bindegarns gegenüber dem Verstärkungsgarn im Textilteil gering halten. Außerdem ist der Platzbedarf zwischen zwei benachbarten Verstärkungsfäden des Verstärkungssystems, den ein Bindeschussfaden oder ein Bindekettfaden beansprucht, gering. Die mechanische Belastbarkeit, insbesondere die Zugbelastbarkeit des Verstärkungsgarns für die Verstärkungsfäden ist größer als die Belastbarkeit des Bindegarns für die Bindefäden.

Als Bindegarn kommen PES- oder Phenoxy-Garne in Betracht, wie etwa Grilon MS ® der Firma EMS Chemie. Es können auch andere Garne, insbesondere Schmelzklebegarne, verwendet werden, wie etwa Co-Polyester-Garne oder thermoplastische Garne, wie z.B. PA. Bevorzugt besteht das Bindegarn teilweise oder vollständig aus einem Kunststoff, der der Kunststoffmatrix des Verbundwerkstoffelements entspricht.

Bei einer bevorzugten Ausführungsform wird für das Bindegarn ein Material eingesetzt, das sich bei der Herstellung des Verbundwerkstoffelements gut und im Wesentlichen vollständig mit dem Kunststoff des Verbundwerkstoffes verbindet. Das Material des Bindegarns kann abhängig von dem Kunststoff des Verbundwerkstoffes gewählt werden. Insbesondere enthält das Bindegarn ein Material, dessen Schmelztemperatur maximal so groß ist wie die Temperatur, die bei der Herstellung des Verbundwerkstoffelements bzw. des Verbundwerkstoffkörpers vorherrscht, so dass ein Verschmelzen zwischen dem Bindegarn und dem Kunststoff des Verbundwerkstoffes erfolgt.

Vorzugsweise wird der Titer des Bindegarns derart festgelegt, dass die interlaminare Scherfestigkeit des herzustellenden Verbundwerkstoffes bzw. Verbundwerkstoffkörpers von einem durch das Verstärkungssystem vorgegebenen Sollwert maximal um einen vorgegebenen Toleranzwert abweicht. Beispielsweise kann der Massenanteil des Bindegarns im Bindungssystem so vorgegeben werden, dass die allein durch das Verstärkungssystem erreichte interlaminare Scherfestigkeit maximal um einen Toleranzwert von beispielsweise 5% abweicht. Dies kann insbesondere dann von Bedeutung sein, wenn sich das verwendete Bindegarn nicht oder nur schlecht mit dem Kunststoff des herzustellenden Verbundwerkstoffes verbinden kann.

Bei einer vorteilhaften Ausführung weist das Bindegarn einen Kern und einem dem Kern umschließenden Mantel auf. Der Kern und der Mantel sind vorzugsweise aus unterschiedlichem Material hergestellt. Insbesondere ist die Schmelztemperatur des Mantels geringer als die Schmelztemperatur des Kerns. Der Mantel besteht vorzugsweise aus Kunststoff. Es können daher die Schmelzklebeeigenschaften des Bindegarns durch Schmelzen des Mantels aktiviert werden, ohne dass der Kern seine Stabilität oder Struktur verliert.

Bei der Verwendung von Schmelzklebegarnen bzw. Garnen mit einem Kern oder einem Mantel mit unterschiedlichen Schmelztemperaturen ist eine einfache Herstellung von Vorformlingen gegeben. Das Textilteil kann in die gewünschte Form drapiert und anschließend können die Schmelzklebeeigenschaften des Bindegarns aktiviert werden, insbesondere durch Einwirkung von einer Strahlung, beispielsweise thermischer Strahlung. Die Verwendung von Bindemitteln zur Lagefixierung der Bindegarne in einer dreidimensionalen Gestalt des Textilteils ist alternativ oder zusätzlich möglich, kann aber bei Bindegarnen mit Schmelzklebeeigenschaft entfallen, da die Bindegarne bereits die Fixierungsfunktion übernehmen.

Das Textilteil eignet sich insbesondere für die Verwendung zur Herstellung eines Verbundwerkstoffelements. Ein solches Verbundwerkstoffelement weist ein Textilteil auf, das eine Textillage bildet sowie eine Kunststoffmatrix, die mit der Textillage verbunden ist. Hierzu kann beispielsweise eine Kunststofffolie mit der Textillage verbunden werden, insbesondere durch thermische Einwirkung und/oder Druckeinwirkung. Das Verbundwerkstoffelement kann auch mehrere Textillagen aufweisen. Die Kunststoffmatrix kann durch Verbinden wenigstens einer Kunststofffolie mit dem wenigstens einen Textilteil oder durch Einbringen von fließfähigem Kunststoff in eine das Textilteil aufnehmende Form hergestellt sein. Beispielsweise kann das wenigstens eine Textilteil zunächst in die etwa dem späteren herzustellenden Verbundwerkstoffelement entsprechende Form drapiert werden. Gegebenenfalls werden dabei mehrere Textilteile geschichtet. Die Verstärkungsfäden werden in die gewünschte Richtung orientiert. Die so entstandene Preform kann zur Aufrechterhaltung ihrer Gestalt fixiert werden, beispielsweise mit einem Bindemittel oder durch Aktivieren des Schmelzklebeeigenschaft des Binde- und/oder des Verstärkungsgarns. Die Preform wird in eine Form eingelegt, in die anschließend fließfähiger Kunststoff bzw. Harz eingebracht wird. Nach dem Aushärten des Kunststoffes kann das Verbundwerkstoffelement aus der Form entnommen werden. Der wenigstens eine zweite Abschnitt mit dem Gelege der Verstärkungsfäden sorgt für eine gute Drapierfähigkeit, während der wenigstens eine erste Abschnitt mit den gewebten Verstärkungsfäden den wenigstens einen zweiten Abschnitt und/oder das Bindungssystem fixiert. Beim Einbringen des Kunststoffes in die Form wird ein versehentliches Verschieben oder Verrutschen der Verstärkungsfäden im wenigstens einen zweiten Abschnitt vermieden oder zumindest reduziert.

Ein solches Textilteil lässt sich auf einer Webmaschine herstellen. Dabei werden Verstärkungsschussfäden und Bindeschussfäden in einer vorgegebenen Reihenfolge nacheinander eingetragen bzw. eingeschossen. Während des Schusseintrags mit einem Verstärkungsschussfaden befinden sich die Verstärkungskettfäden, die durch den wenigstens einen ersten Abschnitt verlaufen, abhängig von der Bindungsart im Oberfach oder im Unterfach. Die Verstärkungskettfäden, die durch einen wenigstens zweiten Abschnitt verlaufen, befinden sich stets in demselben Fach, entweder im Oberfach oder im Unterfach. Auf diese Weise wird im ersten Abschnitt ein Gewebe zwischen den Verstärkungsfäden und dem zweiten Abschnitt ein Gelege zwischen den Verstärkungsfäden erzeugt.

Bei einem Schusseintrag mit einem Bindeschussfaden befinden sich die durch den wenigstens einen zweiten Abschnitt verlaufenden Verstärkungskettfäden jeweils in demselben Fach, entweder im Oberfach oder im Unterfach, während sich zumindest ein Teil der durch diesen zweiten Abschnitt verlaufenden Bindekettfäden im jeweils anderen Fach befindet. Dadurch wird im zweiten Abschnitt die Einfassung des Verstärkungssystems zwischen den Bindekettfäden und den Bindschussfäden erreicht.

Weitere vorteilhafte Ausgestaltungen der Erfindung ergeben sich aus den abhängigen Patentansprüchen sowie der Beschreibung. Die Beschreibung beschränkt sich auf wesentliche Merkmale der Erfindung. Die Zeichnung ist ergänzend heranzuziehen. Nachfolgend werden Ausführungsbeispiele der Erfindung anhand der beigefügten Zeichnung erläutert. Es zeigen:
Figuren 1 bis 4 jeweils ein Ausführungsbeispiel eines ersten Abschnitts sowie eines zweiten Abschnitts eines Textilteils in schematischer Draufsicht,
Figur 5 die schematische Darstellung einer Bindungsstelle zwischen Bindeschussfaden und Bindekettfaden im Bindungssystem in schematischer Draufsicht,
Figur 6 die Bindungsstelle nach Figur 5 in einem Schnittbild durch das Textilteil gemäß Schnittlinie VI-VI,
Figur 7 eine Prinzipdarstellung eines Bindegarns für die Bindefäden und eines Verstärkungsgarns für die Verstärkungsfäden,
Figur 8 eine schematische, blockschaltbildähnliche Darstellung eines Webmaschine während des Eintrags eines Bindeschussfadens,
Figur 9 die Webmaschine nach Figur 8 während des Eintrags eines Verstärkungsschussfadens,
Figur 10, eine schematische, blockschaltbindähnliche Darstellung der Herstellung eines Verbundwerkstoffelements in Plattenform,
Figur 11 eine Variante der Herstellung eines Verbundwerkstoffkörpers aus einem Verbundwerkstoffelement in stark schematisierter blockschaltbildähnlicher Darstellung und
Figur 12 eine weitere Variante der Herstellung eines Verbundwerkstoffkörpers in stark schematisierter blockschaltbildähnlicher Darstellung.

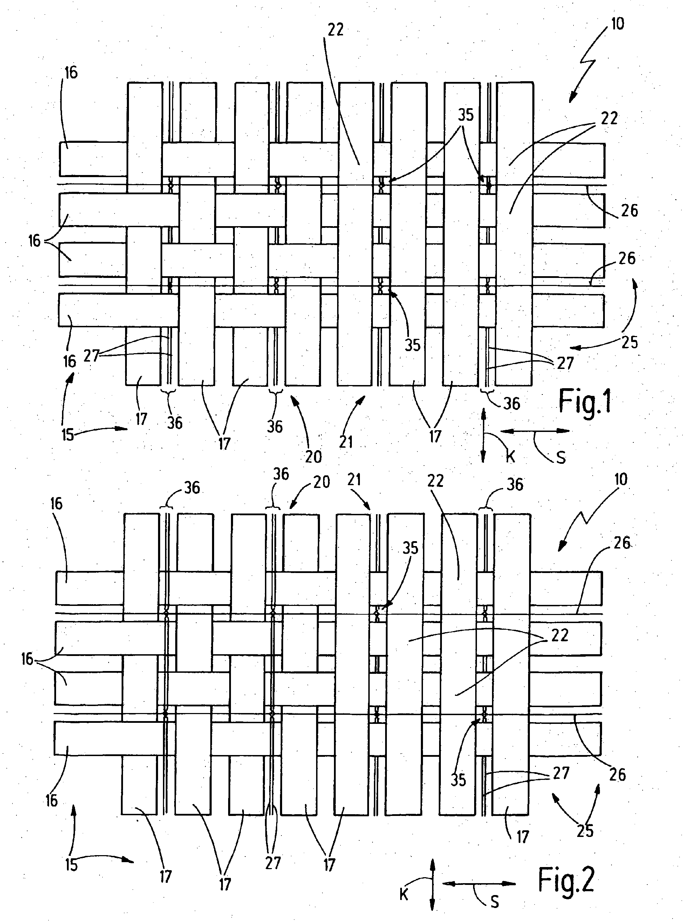

In den Figuren 1 bis 4 ist jeweils äußerst schematisch der Aufbau eines Texteilteils 10 veranschaulicht. Das Textilteil 10 dient insbesondere zur Herstellung eines Verbundwerkstoffelements 11 oder eines Verbundwerkstoffkörpers 12 mit einer Textillage 13, die durch ein Textilteil 10 gebildet ist.

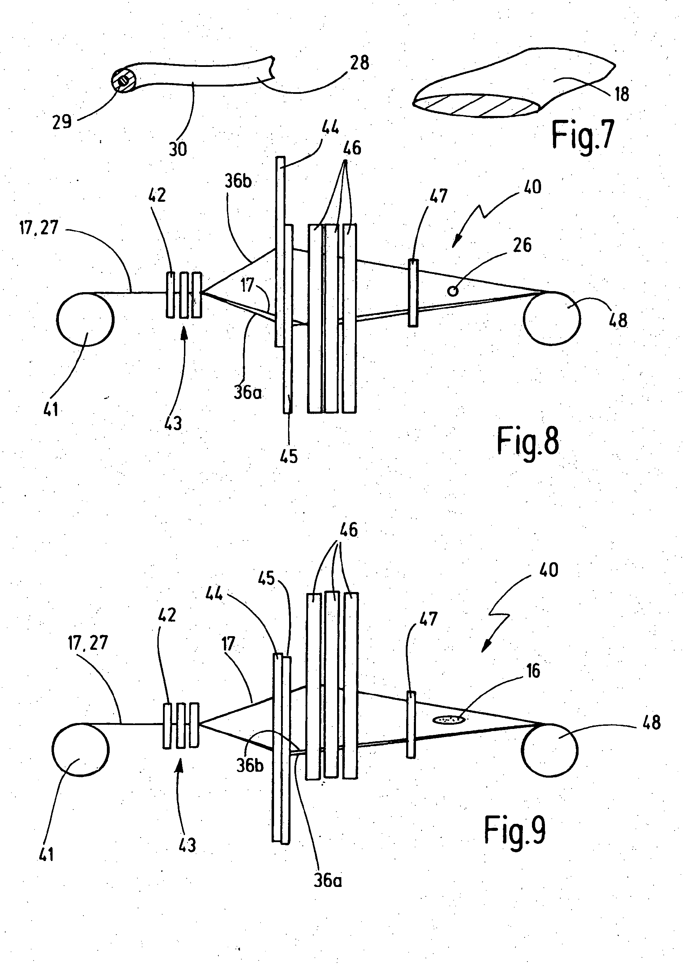

Das Textilteil 10 weist ein Verstärkungssystem 15 mit Verstärkungsschussfäden 16 und Verstärkungskettfäden 17 auf, die aus einem Verstärkungsgarn 18 hergestellt sind. Das Verstärkungsgarn 18 ist schematisch in Figur 7 veranschaulicht und weist einen Flachquerschnitt mit ovaler oder ellipsenähnlicher Kontur auf. Durch das Verstärkungsgarn 18 erhält der das Textilteil 10 aufweisende Verbundwerkstoffkörper 12 bzw. das das Textilteil 10 aufweisende Verbundwerkstoffelement 11 die gewünschte mechanischen Eigenschaften, wie etwa die gewünschte mechanische Festigkeit und Steifigkeit. Das Verstärkungsgarn 18 könnte anstelle eines Flachquerschnitts auch einen im Wesentlichen kreisförmigen Querschnitt aufweisen.

Das Verstärkungsgarn 18 kann Kohlefasern, Aramidfasern oder Glasfasern aufweisen oder aus derartigen Fasern bestehen. Es ist alternativ auch möglich, das Verstärkungsgarn 18 als sogenanntes Roving auszuführen, bei dem eine Vielzahl von einzelnen Fasern ungedreht parallel zueinander angeordnet sind.

Die aus dem Verstärkungsgarn 18 bestehenden Verstärkungskettfäden 17 sowie die Verstärkungsschussfäden 16 bilden in wenigstens einem ersten Abschnitt 20 des Textilteils 10 ein Gewebe und in wenigstens einem zweiten Abschnitt 21 des Textilteils 10 ein Gelege. Die Verstärkungsschussfäden 16 und die Verstärkungskettfäden 17, die durch den ersten Abschnitt 20 verlaufen, sind unmittelbar miteinander verwoben, vorzugsweise in einer üblichen Bindung, wie Leinwandbindung, Köperbindung, Atlasbindung oder Dreherbindung. In den Figuren 1 bis 4 ist beispielhaft eine Leinwandbindung im ersten Abschnitt 20 veranschaulicht. In dem zweiten Abschnitt 21 verlaufen sowohl die Verstärkungsschussfäden, als auch die Verstärkungskettfäden 17 gestreckt und stehen miteinander in keiner unmittelbaren Bindung. Die Verstärkungsschussfäden 16 liegen an den Verstärkungskettfäden 17 im zweiten Abschnitt 21 an. Die Verstärkungsfäden 16, 17 bilden im Abschnitt 21 bindungsfreie Kreuzungsstellen 22. Der Abstand zwischen benachbarten Verstärkungsschussfäden 16 und der Abstand zwischen benachbarten Verstärkungskettfäden 17 hängt sowohl im ersten Abschnitt 20, als auch im zweiten Abschnitt 21 von den gewünschten mechanischen Eigenschaften des mit Hilfe des Textilteils 10 hergestellten Verbundwerkstoffelements 11 ab.

Die Anzahl der ersten Abschnitte 20 und der zweiten Abschnitte 21 des Textilteils 10 kann beliebig sein. Die Anordnung und Anzahl der vorhandenen ersten Abschnitte 20 und zweiten Abschnitte 21 wird so gewählt, dass das damit hergestellte Verbundwerkstoffelement 11 bzw. der damit hergestellte Verbundwerkstoffkörper 12 Zonen mit hoher mechanischer Festigkeit in Bezug auf die webtypische Bindung und Zonen mit hoher Drapierbarkeit und den mechanischen Eigenschaften in der Erstreckungsebene der Verstärkungsfäden ("In-Plane-Eigenschaften") aufweist. In den Zonen mit hoher Drapierbarkeit weist das Textilteil 10 einen zweiten Abschnitt 21 auf, während es in Zonen mit hoher mechanischer Festigkeit einen ersten Abschnitt 20 aufweist.

Um beim Umformen des Textilteils 10 bei der Herstellung eines Vorformlings (auch Preform genannt) oder eines Verbundwerkstoffelements oder auch beim Umformen eines mit Hilfe des Textilteils 10 hergestellten Verbundswerkstoffelements 11 ein unerwünscht starkes Verschieben der Verstärkungsfäden 16, 17 in dem wenigstens einen zweiten Abschnitt 21 zu vermeiden, weist das Textilteil 10 beispielsgemäß ein Bindungssystem 25 auf.

Bei einer alternativen nicht dargestellten Variante können die Verstärkungsfäden 16, 17 in dem wenigstens einen zweiten Abschnitt 21 allein oder zusätzlich zu dem Bindungssystem 25 durch den wenigstens einen angrenzenden ersten Abschnitt 20 gegen ein Verschieben gesichert sein. Dabei grenzt beispielsweise an den zweiten Abschnitt 21 von mehreren Seiten in der Erstreckungsebene des Textilteils 10 der wenigstens eine erste Abschnitt 20 an. Die Erstreckungsebene des Textilteils 10 ist durch die Kettfadenrichtung K und/oder Schussfadenrichtung S definiert. Nach dem Umformen des Textilteils 10 kann aus der Erstreckungsebene eine gekrümmte Fläche werden.

Das Bindungssystem 25 enthält Bindeschussfäden 26 und Bindekettfäden 27. Die Bindefäden 26, 27 sind aus einem Bindegarn 28 hergestellt, wobei ein Ausführungsbeispiel des Bindegarns mit einem Kern 29 und einem Mantel 30 in Figur 7 veranschaulicht ist. Das Bindegarn hat beim Ausführungsbeispiel einen im Wesentlichen kreisrunden Querschnitt. Dieser Querschnitt ist kleiner als der Querschnitt des Verstärkungsgarns 18. Das Bindegarn hat vorzugsweise einen Titer von kleiner als 500 dtex, insbesondere maximal 100 dtex oder maximal 50 dtex. Bei der in Figur 7 dargestellten Ausführungsform hat das Bindegarn 28 Schmelzklebeeigenschaften, die beispielsgemäß durch den Mantel 30 erhalten werden. Der Mantel 30 umschließt den Kern 29 koaxial. Die Schmelztemperatur des Mantels 30 ist kleiner als die Schmelztemperatur des Kerns 29. Bei der Herstellung des Verbundswerkstoffelements 11 bzw. des Verbundwerkstoffkörpers 12 werden die Schmelzklebeeigenschaften des Mantels 30 und mithin des Bindegarns 28 aktiviert, wodurch eine Fixierung der Bindegarne 28 mit den Verstärkungsgarnen 18 des Textilteils 10 erreicht wird. Dadurch ist es auch möglich, vor der Herstellung eines Verbundswerkstoffs das Textilteil 10 in eine gewünschte dreidimensionale Form zu bringen und einen Vorformling bzw. eine Preform herzustellen.

Sowohl die Bindekettfäden 27, als auch die Verstärkungskettfäden 17 verlaufen in einer Kettfadenrichtung K und beim Ausführungsbeispiel kreuzungsfrei nebeneinander. Die Verstärkungsschussfäden 16 und die Bindeschussfäden 26 verlaufen in einer Schussfadenrichtung S und beim Ausführungsbeispiel kreuzungsfrei nebeneinander.

Zumindest in dem wenigstens einen zweiten Abschnitt 21 des Textilteils 10 fassen die Bindekettfäden 27 und die Bindeschussfäden 26 das Verstärkungssystem 15 ein, um die Verstärkungsfäden 16, 17 in diesem zweiten Abschnitt 21 gegen ein versehentliches Verschieben zu sichern. Dabei verlaufen die Bindeschussfäden 26 auf einer Seite des Verbindungssystems 15, während die Bindekettfäden 27 auf der jeweils anderen Seite des Verstärkungssystems 15 angeordnet sind. An Bindungsstellen 35 sind die Bindeschussfäden 26 mit den Bindekettfäden 27 durch eine gewebte Bindung verbunden. Das Gelege aus Verstärkungsschussfäden 16 und Verstärkungskettfäden 17 im zweiten Abschnitt 21 wird dadurch gegen zu große Bewegungen in Kettfadenrichtung K oder Schussfadenrichtung S gesichert.

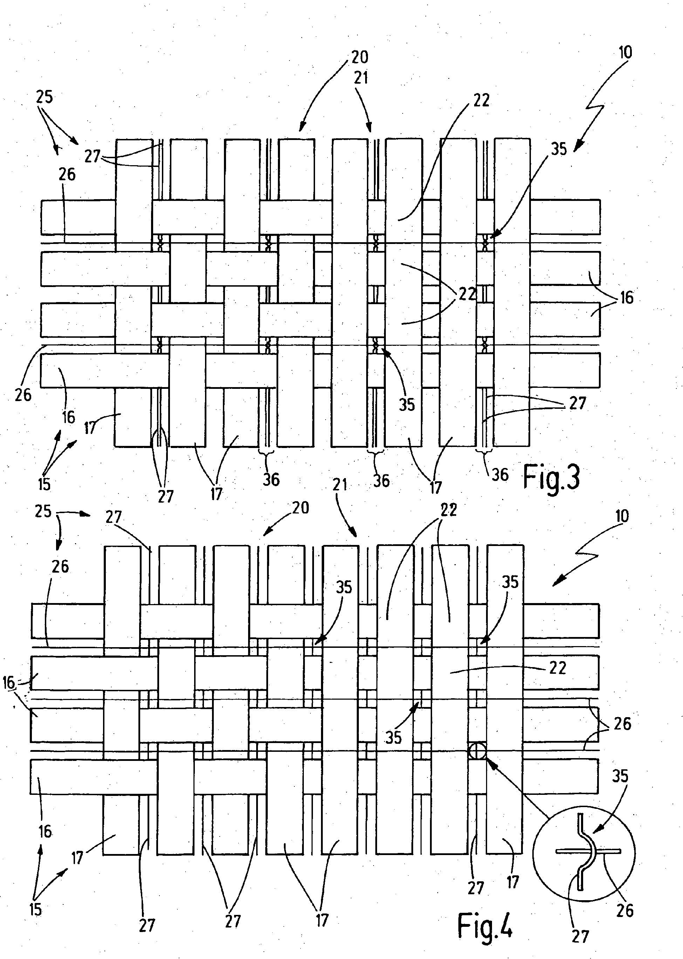

Bei einem Ausführungsbeispiel nach Figur 4 ist zwischen einem Bindekettfaden 27 und einem Bindeschussfaden 26 an einer Bindungsstelle 35 eine einfache Bindung vorgesehen. Der Bindekettfaden 27 übergreift den Bindeschussfaden 26 an der Bindungsstelle 35. Bei den in den Figuren 1 bis 3 dargestellten Ausführungsformen ist eine Volldreherbindung oder eine Halbdreherbindung an die Bindungsstellen 35 des Bindungssystems 25 vorgesehen. Hierfür verlaufen vorzugsweise jeweils zwei Bindekettfäden 27 unmittelbar benachbart zwischen zwei Verstärkungskettfäden 17. Dieses Kettfadenpaar 36 weist einen Dreherkettfaden 36a und einen Steherkettfaden 36b auf, die von jeweils einem Bindekettfaden 27 gebildet sind. An der Bindungsstelle 35 verläuft der Bindeschussfaden 26 zwischen dem Dreherkettfaden 36a und dem Steherkettfaden 36b. Dadurch ergibt sich eine gute Fixierung im Bindungssystem 25 und mithin auch im Verstärkungssystem 15 im zweiten Abschnitt 21. Diese Verschiebefestigkeit kann durch eine geringe Fadenspannung im Bindungssystem 25 erreicht werden. Eine Welligkeit der Verstärkungsfäden 16, 17 im zweiten Abschnitt 21 ist dadurch vermieden.

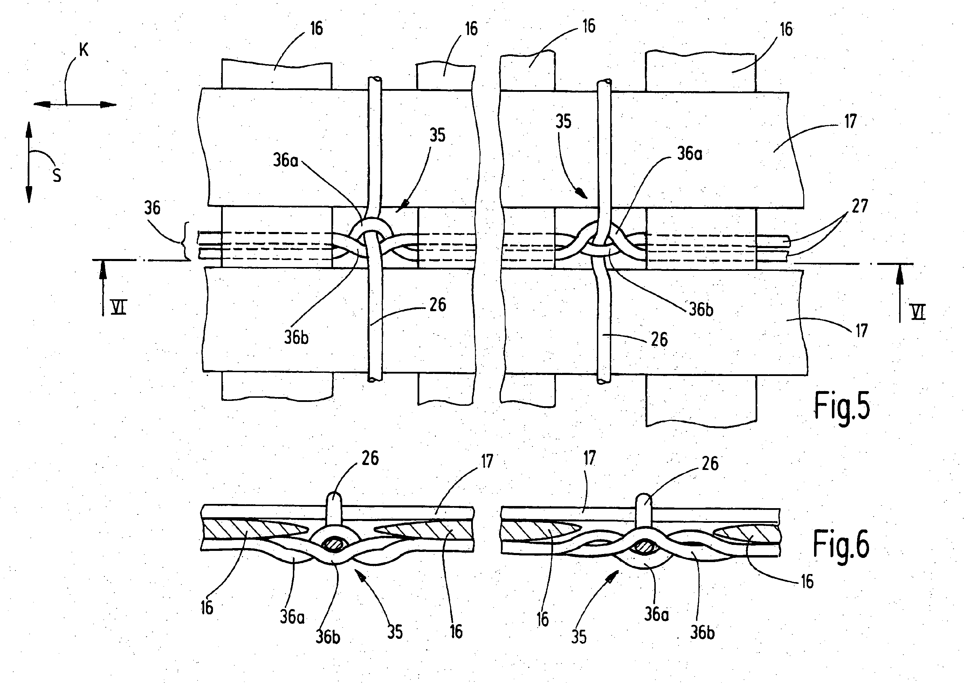

Ein Ausführungsbeispiel für eine Dreherbindung an der Bindungsstelle 35 ist in den Figuren 5 und 6 schematisch dargestellt. Dabei kreuzen sich der Dreherkettfaden 36a und der Steherkettfaden 36b an einer Bindungsstelle 35 einmal unmittelbar vor dem Bindeschussfaden 26 und ein weiteres Mal unmittelbar hinter dem Bindeschussfaden 26 in Kettfadenrichtung K gesehen. An dieser Bindungsstelle ist ein möglichst kleiner Freiraum zwischen den beiden benachbarten Verstärkungsschussfäden 16 und den beiden benachbarten Verstärkungskettfäden 17 vorhanden, so dass durch die Fadenkreuzungen im Bindungssystem 25 an der Bindungsstelle 35 keine Fadenwelligkeit im Verstärkungssystem 15 erzeugt wird.

Anstelle der in den Figuren 5 und 6 dargestellten Dreherbindung können auch andere Bindungsarten im Bindungssystem 25 verwendet werden. Als Steherkettfaden 36b kann alternativ zu den dargestellten Ausführungsbeispielen auch ein Verstärkungskettfaden dienen.

Bei den Ausführungsbeispielen gemäß der Figuren 1 und 4 fasst das Bindungssystem 25 das Verstärkungssystem 15 auch in dem wenigstens einen ersten Abschnitt 20 ein. Dies kann bspw. bei der Herstellung eines Vorformlings aus dem Textilteil 10 vorteilhaft sein, um unerwünschte Relativverschiebungen zwischen dem Bindungssystem 25 und dem Verstärkungssystem 15 auch in dem wenigstens einen ersten Abschnitt 20 zumindest zu reduzieren. Bei den Ausführungsbeispielen nach Figuren 2 und 3 liegt das Bindungssystem 25 und mithin sowohl die Bindeschussfäden 26, als auch die Bindekettfäden 27 in dem ersten Abschnitt 20 lediglich auf einer Seite des Verstärkungssystems 15 an, ohne dieses einzufassen. Für die Fixierung der Verstärkungskettfäden 17 mit den Verstärkungsschussfäden 16 in dem wenigstens einen ersten Abschnitt 20 ist das Bindungssystem 25 nicht erforderlich.

In den Figuren 8 und 9 ist schematisch eine Webmaschine 40 zur Herstellung des Textilteils 10 dargestellt. Die Webmaschine 40 weist einen Streichbaum 41 auf, über den die Kettfäden 17, 27 zugeführt werden. Die Kettfäden 17, 27 verlaufen zunächst durch einen Kettfadenwächter 42 und Lamellen 43. Anschließend sind mehrere Webschäfte mit jeweils einer Vielzahl von Weblitzen angeordnet, die in Vertikalrichtung zur Öffnung eines Fachs auf und ab bewegt werden können. Die Webmaschine 40 ist bei diesem Ausführungsbeispiel mit einem Drehersystem zur Herstellung einer Dreherbindung im Bindungssystem 25 ausgestattet. Für eine alternativ einsetzbare einfachere webtechnische Bindung können übliche Litzen und Webschäfte verwendet werden.

Die Steherkettfäden 36b sind durch die Weblitzen in einem ersten Webschaft 44 geführt. Die Dreherkettfäden 36a sind in einem Dreherwebgeschirr in einem zweiten Webschaft 45 geführt. Ein solches Drehersystem ist zum Beispiel in EP 2 063 007 A1 beschrieben, auf das insoweit Bezug genommen wird. Dort werden Halbdreherbindungen erzeugt. Es können jedoch auch Dreherwebgeschirre verwendet werden, um Volldreherbindungen herzustellen.

Abhängig von der Art der Bindung zwischen den Verstärkungskettfäden 17 und den Verstärkungsschussfäden 16 in wenigstens einen ersten Abschnitt 20 sind mehrere dritte Webschäfte 4 vorhanden. Durch die Litzen in jedem der dritten Webschäfte 46 wird ein Teil der Verstärkungskettfäden 17 geführt, was der Übersicht wegen in den schematischen Darstellungen gemäß der Figuren 8 und 9 nicht im Einzelnen veranschaulicht ist. Die Litzen zur Verwendung in den dritten Webschäften 46 zur Führung der Verstärkungskettfäden 17 können beispielsweise wie in EP 1 795 636 A1 beschrieben ausgestaltet sein.

Im Anschluss an die Webschäfte 44, 45, 46 verlaufen die Kettfäden 17, 36a, 36b durch ein zum Anschlag eines eingetragenen Schussfadens 16, 26 an einer Textilkante vorhandenes Riet 47. Das hergestellte Textilmaterial wird durch einen Warenabzug 48 aufgenommen bzw. aufgewickelt.

Bei der Herstellung des Textilteils 10 befinden sich die Webschäfte 44, 45, 46 bei einem Schusseintrag in einer vorgegebenen Fachstellung, beispielsweise im Oberfach oder im Unterfach. Wenn im Verstärkungssystem 15 ein erster Abschnitt 20 mit einer Leinwandbindung hergestellt werden soll, befindet sich jeder zweite durch diesen ersten Abschnitt 20 verlaufende Verstärkungskettfaden 17 im Oberfach und die jeweils in Schussfadenrichtung S gesehen dazwischen befindlichen Verstärkungskettfäden 17 im Unterfach. Nach jedem Schusseintrag eines Verstärkungsschussfadens 16 wechseln die Verstärkungskettfäden 17 das Fach.

Soll beim Eintrag eines Verstärkungsschussfaden 16 ein zweiter Abschnitt 21 erzeugt werden, verbleiben alle Verstärkungskettfäden 17, die durch diesen zweiten Abschnitt 21 hindurch verlaufen, entweder im Oberfach oder im Unterfach, je nach dem ob die Verstärkungsschussfäden 16 unterhalb oder oberhalb der Verstärkungskettfäden 17 abgelegt werden sollen.

Zur Einfassung des Verstärkungssystems 15 in einem zweiten Abschnitt 21 oder auch in einem ersten Abschnitt 20 positioniert der erste Webschaft 44 die Steherkettfäden 36b beispielsgemäß im Oberfach. Die Dreherkettfäden 36a sowie die Verstärkungskettfäden 17 werden über die anderen Webschäfte 45, 46 im Unterfach positioniert (Figur 8). Abhängig von der hergestellten Dreherbindung werden durch das Dreherwebgeschirr im zweiten Webschaft 45 die Kreuzungsstellen vor und/oder hinter dem Bindeschussfaden 26 erzeugt.

Erste Abschnitte 20 und zweite Abschnitte 21 können sich in Kettfadenrichtung K und/oder in Schussfadenrichtung S abwechseln beziehungsweise aneinander anschließen.

Alternativ zu der schematischen Darstellung in den Figuren 8 und 9 kann auch eine Jacquard-Webmaschine zur Herstellung des Textilteils 10 eingesetzt werden. In einer Jacquard-Webmaschine können über ansteuerbare Platinen alle Kettfäden 17, 27 einzeln in eine gewünschte Fachstellung gebracht werden, wodurch eine große Vielfalt an Bindungsarten herstellbar ist. Das Herstellen von ersten und zweiten Abschnitten 20, 21 in beliebiger Folge und Kombination sowohl in Kettfadenrichtung K als auch in Schussfadenrichtung S ist mit einer Jacquard-Webmaschine besonders einfach.

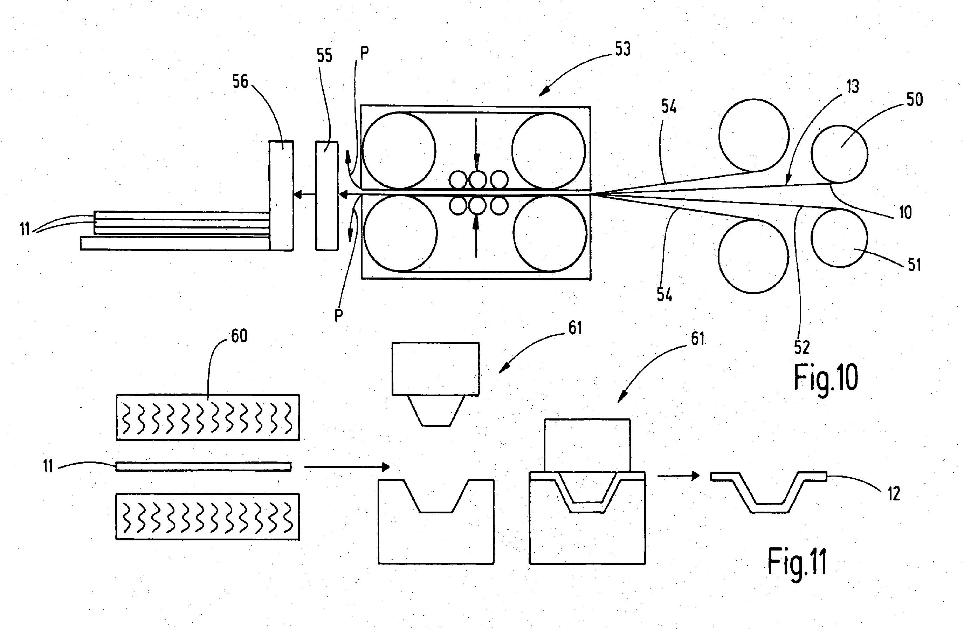

Mithilfe des Textilteils 10 kann ein plattenförmiges Verbundwerkstoffelement 11 hergestellt werden, wie dies beispielhaft in Figur 10 veranschaulicht ist. Das Textilteil 10 wird als Textilband zur Bildung der Textillage 13 von einer ersten Rolle 50 abgewickelt. Über eine zweite Rolle 51 kann zur Herstellung des Verbundwerkstoffes eine Kunststofffolie 52 zugeführt werden. Die Textillage 13 und die Kunststofffolie 52 werden z.B. einer Doppelbandpresse 53 zugeführt und dort unter Einwirkung von Druck und/oder Wärme zu einem Verbundwerkstoff verbunden. Um ein Anhaften des Verbundwerkstoffes in den Werkzeugen der Doppelbandpresse 53 zu vermeiden, können die Textillage 13 und die Kunststofffolie 52 vor der Doppelbandpresse zwischen zwei Schutzlagen 54 angeordnet werden, die nach dem Durchlaufen der Doppelbandpresse 53 wieder entfernt werden, wie dies durch die beiden Pfeile P veranschaulicht ist.

Im Anschluss an die Doppelbandpresse 53 und das Entfernen der Schutzlagen 54 kann der Verbundwerkstoff in einer Station 55 besäumt und in einer anschließenden Schneidstation 56 in der gewünschten Länge abgelängt werden.

Dadurch werden plattenförmige Verbundwerkstoffelemente 11 hergestellt, die auch als Organobleche bezeichnet werden können.

Figur 11 veranschaulicht schematisch die Umformung eines plattenförmigen Verbundwerkstoffelements 11 zu einem dreidimensionalen Verbundwerkstoffkörper 12. Das Verbundwerkstoffelement 11 wird zunächst in einer Heizstation 60 erwärmt. In diesem erwärmten Zustand wird das Verbundwerkstoffelement 11 einer Umformvorrichtung 61, beispielsweise einer Presse zugeführt und über Umformwerkzeuge in die gewünschte Form gebracht. Dieser Umformprozess kann auch gestuft in mehreren Pressenstufen durchgeführt werden. In dem gewünschten ungeformten Zustand wird das Verbundwerkstoffmaterial abgekühlt und nach der Abkühlung schließlich als Verbundwerkstoffkörper 12 entnommen.

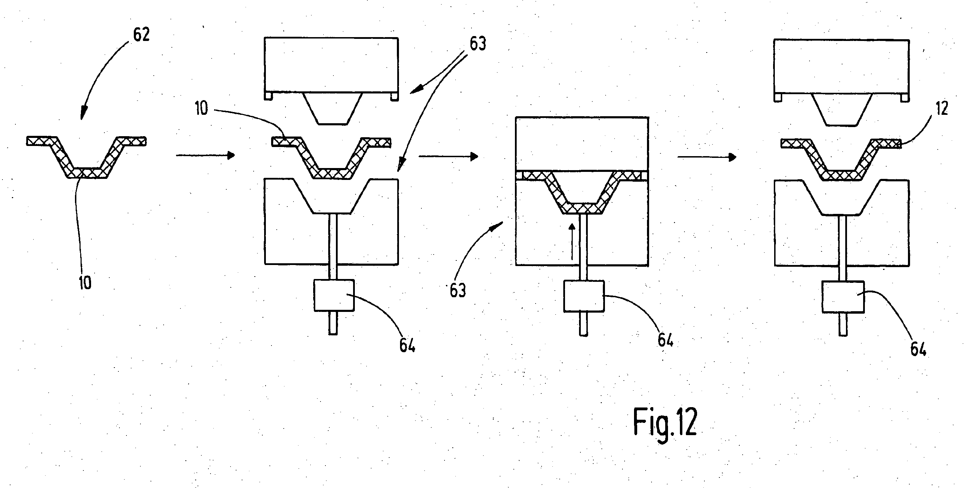

Alternativ zu dieser geschilderten Vorgehensweise beim Herstellen eines Verbundwerkstoffkörpers 12 kann das wenigstens eine Textilteil 10 auch zunächst in die gewünschte dreidimensionale Form drapiert werden, wodurch eine sogenannte Preform 62 entsteht. Das umgeformte Textilteil 10 bzw. die Preform 62 kann fixiert werden, beispielsgemäß durch die Aktivierung der Schmelzklebeeigenschaften der Bindegarne 28 im Bindungssystem 25 und/oder durch ein zusätzliches Bindemittel. Wie in Figur 12 veranschaulicht kann die Preform 62 anschließend in eine Form 63 eingelegt werden. Nach dem Schließen dieser Form 63 wird fließfähiger Kunststoff, beispielsweise Harz, in die Form 63 eingebracht. Um den Kunststoff in die Form 63 zu bringen, wird ein Differenzdruck erzeugt, beispielsweise indem die Luft aus der Form 63 gesaugt wird oder der fließfähige Kunststoff unter Druck gesetzt und in die Form gedrückt oder eingespritzt wird. In Figur 12 ist schematisch und beispielhaft ein Ventil 64 dargestellt, das das Einspritzen des Kunststoffs in die Form 63 steuert.

Bei geschlossener Form härtet der Kunststoff aus und bildet die Kunststoffmatrix des Verbundwerkstoffelements 11 bzw. des Verbundwerkstoffkörpers 12. Beim Aushärten kann der Kunststoff in der Form unter Druck gesetzt werden. Nach dem Aushärten wird die Form 63 geöffnet und der fertige Verbundwerkstoffkörper 12 kann entnommen werden. Dieses Verfahren wird auch als "Resin-Transfer-Molding" bezeichnet.

Alternativ wäre es auch möglich, eine Preform 62 mit einer oder mehreren Kunststofffolien zu verbinden.

Die vorliegende Erfindung betrifft ein Textilteil 10, das insbesondere für die Herstellung eine Verbundwerkstoffelements 11 oder eines Verbundwerkstoffkörpers 12 vorgesehen und ausgestaltet ist. Das Textilteil 10 weist ein Verstärkungssystem 15 aus Verstärkungskettfäden 16 und Verstärkungsschussfäden 17 auf, die aus einem Verstärkungsgarn 18 hergestellt sind. Ferner ist ein Bindungssystem 25 vorhanden, das aus Bindekettfäden 27 und Bindeschussfäden 26 besteht. Die Bindefäden 26, 27 sind aus einem Bindegarn 28 hergestellt. Das Verstärkungssystem 15 weist wenigstens einen ersten Abschnitt 20 auf, in den die Verstärkungsfäden 16, 17 unmittelbar miteinander verwoben sind und daher eine Bindung eingehen. Dies führt zu einer hohen mechanischen Belastbarkeit des Verbundwerkstoffes in dem Bereich, in dem der wenigstens eine erste Abschnitt 20 des Textilteils 10 angeordnet ist. Das Verstärkungssystem 15 weist außerdem wenigstens einen zweiten Abschnitt 21 auf, in den die Verstärkungsfäden 16, 17 bindungsfreie Kreuzungsstellen 22 bilden und vorzugsweise gestreckt aneinander gelegt sind. Das Verbindungssystem 15 stellt in dem wenigstens einen zweiten Abschnitt 21 somit ein Gelege dar. Dieses Gelege wird durch die Bindefäden 26, 27 des Bindungssystems 25 eingefasst. Hierfür bilden die Bindekettfäden 27 mit den Bindeschussfäden 26 in dem wenigstens einen zweiten Abschnitt 21 Bindungsstellen 35, an denen sie das Verstärkungssystem 15 durchgreifen. Durch das im zweiten Abschnitt 21 vorgesehene Gelege des Verstärkungssystems 15 ist in diesem Bereich eine besonders gute Drapierbarkeit und Umformbarkeit gewährleistet. Die in diesem zweiten Abschnitt gestreckt verlaufenden Verstärkungsfäden 16, 17 führen zu guten mechanischen In-Plane-Eigenschaften.

### Bezugszeichenliste:

- 10: Textilteil
- 11: Verbundwerkstoffelement
- 12: Verbundwerkstoffkörper
- 13: Textillage

- 15: Verstärkungssystem
- 16: Verstärkungsschussfaden
- 17: Verstärkungskettfaden
- 18: Verstärkungsgarn

- 20: erster Abschnitt
- 21: zweiter Abschnitt
- 22: Kreuzungsstelle

- 25: Bindungssystem
- 26: Bindeschussfaden
- 27: Bindekettfaden
- 28: Bindegarn
- 29: Kern
- 30: Mantel

- 35: Bindungsstelle
- 36: Kettfadenpaar
- 36a: Dreherkettfaden
- 36b: Steherkettfaden

- 40: Webmaschine
- 41: Streichbaum
- 42: Kettfadenwächter
- 43: Lamellen
- 44: erster Webschaft
- 45: zweiter Webschaft
- 46: dritter Webschaft
- 47: Riet
- 48: Warenabzug

- 50: erste Rolle
- 51: zweite Rolle
- 52: Kunststofffolie
- 53: Doppelbandpresse
- 54: Schutzlagen
- 55: Station
- 56: Schneidstation

- 60: Heizstation
- 61: Umformvorrichtung

- K: Kettfadenrichtung
- P: Pfeil
- S: Schussfadenrichtung

## Patentansprüche

1. Textilteil (10) zur Verwendung in Verbundwerkstoffen,
mit einem Verstärkungssystem (15) aus Verstärkungskettfäden (17) und verstärkungsschussfäden (16),
mit wenigstens einem ersten Abschnitt (20) und wenigstens einem zweiten Abschnitt (21),
wobei die Verstärkungskettfäden (17) und die Verstärkungsschussfäden (16) in dem ersten Abschnitt (20) unmittelbar miteinander in Bindung stehen,
wobei die Verstärkungskettfäden (17) in dem zweiten Abschnitt (21) an die Verstärkungsschussfäden (16) ohne direkte Webbindung mit den Verstärkungskettfäden (17) gelegt sind,
**dadurch gekennzeichnet, dass** der zweite Abschnitt (21) an mehreren Seiten durch einen oder mehrere erste Abschnitte (20) begrenzt ist und allein durch den wenigstens einen ersten Abschnitt (20) fixiert oder stabilisiert ist und/oder dass das Verstärkungssystem (15) in dem zweiten Abschnitt (21) zwischen Bindeschussfäden (26) und Bindekettfäden (27) eines Bindungssystems (25) eingefasst ist, die miteinander an Bindungsstellen (35) in Bindung stehen.

2. Textilteil (10) nach Anspruch 1,
**dadurch gekennzeichnet, dass** an den Bindungsstellen (35) in dem zweiten Abschnitt (21) jeweils zwei unmittelbar benachbarte Bindekettfäden (27) einen Steherkettfaden (36b) und einen Dreherkettfaden (36a) bilden, die sich kreuzen und wobei ein Bindeschussfaden (26) an der Bindungsstelle (35) zwischen dem Steherkettfaden (36b) und dem Dreherkettfaden (36a) verläuft .

3. Textilteil (10) nach Anspruch 2,
**dadurch gekennzeichnet, dass** der Steherkettfaden (36b) von einem Verstärkungskettfaden (17) oder einem Bindekettfaden (27) gebildet ist und der Dreherkettfaden (36a) von einem Bindekettfaden (27) gebildet ist.

4. Textilteil (10) nach Anspruch 2 oder 3,
**dadurch gekennzeichnet, dass** die Kreuzungsstellen zwischen dem Steherkettfaden (36b) und dem Dreherkettfaden (36a) an der Bindungsstelle (35) mit dem Bindeschussfaden (26) liegen.

5. Textilteil (10) nach einem der vorhergehenden Ansprüche,
**dadurch gekennzeichnet, dass** die Bindekettfäden (26) und die Bindeschussfäden (27) des Bindungssystems (25) in dem ersten Abschnitt (20) auf einer gemeinsamen Seite des Verstärkungssystems (15) angeordnet sind.

6. Textilteil (10) nach einem der vorhergehenden Ansprüche,
**dadurch gekennzeichnet, dass** in dem ersten Abschnitt (20) und/oder in dem zweiten Abschnitt (21) jeweils mehrere Verstärkungskettfäden (17) und mehrere Verstärkungsschussfäden (16) verlaufen.

7. Textilteil (10) nach einem der vorhergehenden Ansprüche,
**dadurch gekennzeichnet, dass** die Anzahl der Kreuzungsstellen (22) des Verstärkungssystems (15) im zweiten Abschnitt (21) gleich oder größer ist als die Anzahl der Bindungsstellen (35) im Bindungssystem (25).

8. Textilteil (10) nach einem der vorhergehenden Ansprüche,
**dadurch gekennzeichnet, dass** die Verstärkungskettfäden (17) und die Verstärkungsschussfäden (16)im zweiten Abschnitt (21) gestreckt angeordnet sind.

9. Textilteil (10) nach einem der vorhergehenden Ansprüche,
**dadurch gekennzeichnet, dass** das Verstärkungssystem (15) aus einem Verstärkungsgarn (18) und das Bindungssystem (25) aus einem Bindegarn (28) hergestellt ist, wobei das Bindegarn (28) im Querschnitt kleiner ist oder einen geringeren Titer aufweist als das Verstärkungsgarn (18).

10. Textilteil (10) nach Anspruch 9,
**dadurch gekennzeichnet, dass** das Bindegarn (28) einen Kern (29) und einen den Kern (29) umschließenden Mantel (30) aufweist, wobei der Kern (29) eine höhere Schmelztemperatur hat als der Mantel (30).

11. Verbundwerkstoffelement (11),
mit einer Textillage (13), die ein Textilteil (10) nach einem der vorhergehenden Ansprüche aufweist,
und mit einer Kunststoffmatrix, die mit der Textillage (13) verbunden ist.

12. Verfahren zur Herstellung eines Textilteils (10) zur Verwendung in Verbundwerkstoffen mit folgenden Schritten:
- Bestücken einer Webmaschine (40) mit verstarkungskettfäden (17) und Bindekettfäden (27) sowie Verstärkungsschussfäden (16) und Bindeschussfäden (26),
- Einschießen der Verstärkungsschussfäden (16) und Bindeschussfäden (26) in einer vorgegebenen Reihenfolge,
wobei sich bei einem Schusseintrag mit einem Verstärkungsschussfaden (26) entzprechend der Bindungsart ein Teil der durch einen ersten Abschnitt (20) verlaufenden Verstärkungskettfäden (17) im Oberfach und der andere Teil im Unterfach befindet und wobei sich bei einem Schusseintrag mit einem Verstärkungsschussfaden (16) alle durch einen zweiten Abschnitt (21) verlaufenden Verstärkungskettfäden (17) immer in demselben Oberfach oder Unterfach befinden,
wobei sich bei einem Schusseintrag mit einem Bindeschussfaden (26) die durch den ersten Abschnitt (20) verlaufenden Verstärkungskettfäden (17) jeweils in demselben Oberfach oder Unterfach befinden, und wobei sich bei einem Schusseintrag mit einem Bindeschussfaden (26) die durch den zweiten Abschnitt (21) verlaufenden Verstärkungskettfäden (17) jeweils in demselben Oberfach oder Unterfach befinden und sich entsprechend der Bindungsart zumindest ein Teil der durch diesen zweiten Abschnitt (21) verlaufenden Bindekettfäden (27) im jeweils anderen Fach befindet,
wodurch ein Verstärkungssystem (15) aus Verstärkungsschussfäden (16) und Verstärkungskettfäden (17) gebildet wird, die im ersten Abschnitt (20) miteinander verwoben sind und wodurch im zweiten Abschnitt (21) die Verstärkungsschussfäden (16) ohne unmittelbare Webbindung an die Verstärkungskettfäden (17) gelegt und durch ein Bindungssystem (25) aus Bindeschussfäden (26) und Bindekettfäden (27) eingefasst sind.

13. Verfahren zur Herstellung eines Verbundwerkstoffelements mit folgenden Schritten:
- Bereitstellen eines Textilteils (10) nach einem der Ansprüche 1 bis 11,
- Bereitstellen eines Kunststoffmaterials (52),
- Verbinden des Textilteils (10) mit dem Kunststoffmaterial (52) zu einem plattenförmigen Verbundwerkstoffelement (11).

14. Verfahren nach Anspruch 13,
**dadurch gekennzeichnet, dass** das ebene Verbundwerkstoffelement (11) erwärmt, in erwärmtem Zustand in einen dreidimensionalen Verbundwerkstoffkörper (12) umgeformt und anschließend abgekühlt wird.

15. Verfahren nach Anspruch 13,
**dadurch gekennzeichnet, dass** das Textilteil (10) in eine Form eingelegt und drapiert wird, und anschließend Kunststoffmaterial in die Form eingespritzt wird.

## Claims

1. Textile part (10) for use in composite materials,
with a reinforcement system (15) comprising reinforcing warp threads (17) and reinforcing weft threads (16),
with at least one section (20) and at least one second section (21),
wherein the reinforcing warp threads (17) and the reinforcing weft threads (16) in the first section (20) are bound directly to one another,
wherein the reinforcing warp threads (17) in the second section (21) are laid on the reinforcing weft threads (16) without a direct weave binding to the reinforcing warp threads (17),
**characterised in that** the second section (21) is delimited on multiple sides by one or more first sections (20) and is fixed or stabilised only by the at least one first section (20) and/or that the reinforcement system (15) in the second section (21) is bound between binding weft threads (26) and binding warp threads (27) of a binding system (25), which are bound to one another at binding points (35).

2. Textile part (10) according to claim 1, **characterised in that** at the binding points (35) in the second section (21) two directly adjacent binding warp threads (27) respectively form a ground warp thread (36b) and a leno warp thread (36a), which cross one another and wherein a binding weft thread (26) at the binding point (35) runs between the ground warp thread (36b) and the leno warp thread (36a).

3. Textile part (10) according to claim 2, **characterised in that** the ground warp thread (36b) is formed by a reinforcing warp thread (17) or a binding warp thread (27) and the leno warp thread (36a) is formed by a binding warp thread (27).

4. Textile thread (10) according to claim 2 or 3, **characterised in that** the intersection points between the ground warp thread (36b) and the leno warp thread (36a) lie at the binding point (35) with the binding weft thread (26).

5. Textile part (10) according to one of the preceding claims, **characterised in that** the binding warp threads (26) and the binding weft threads (27) of the binding system (25) in the first section (20) are arranged on a common side of the reinforcement system (15).

6. Textile part (10) according to one of the preceding claims, **characterised in that** multiple reinforcing warp threads (17) and multiple reinforcing weft threads (16) respectively run in the first section (20) and/or in the second section (21).

7. Textile part (10) according to one of the preceding claims, **characterised in that** the number of intersection points (22) of the reinforcement system (15) in the second section (21) is equal to or higher than the number of binding points (35) in the binding system (25).

8. Textile part (10) according to one of the preceding claims, **characterised in that** the reinforcing warp threads (17) and the reinforcing weft threads (16) are arranged in a drawn arrangement in the second section (21).

9. Textile part (10) according to one of the preceding claims, **characterised in that** the reinforcement system (15) is formed from a reinforcing yarn (18) and the binding system (25) is formed from a binding yarn (28), wherein the binding yarn (28) is smaller in cross-section or has a smaller titre than the reinforcing yarn (18).

10. Textile part (10) according to claim 9, **characterised in that** the binding yarn (28) has a core (29) and a sheath (30) enclosing the core (29), wherein the core (29) has a higher melting temperature than the sheath (30).

11. Composite material element (11),
with a textile layer (13), which has a textile part (10) according to one of the preceding claims,
and with a plastic matrix, which is joined to the textile layer (13).

12. Method for the production of a textile part (10) for use in composite materials with the following steps:
• loading a loom (40) with reinforcing warp threads (17) and binding warp threads (27) as well as reinforcing weft threads (16) and binding weft threads (26),
• inserting the reinforcing weft threads (16) and binding weft threads (26) in a predetermined sequence,
wherein during a weft insertion with a reinforcing weft thread (26) in accordance with the type of binding one portion of the reinforcing warp threads (17) running through a first section (20) is located in the top shed and the other portion is located in the bottom shed and wherein during a weft insertion with a reinforcing weft thread (16) all the reinforcing warp threads (17) running through a second section (21) are always located in the same top shed or bottom shed,
wherein during a weft insertion with a binding weft thread (26) the reinforcing warp threads (17) running through the first section (20) are respectively located in the same top shed or bottom shed, and wherein during a weft insertion with a binding weft thread (26) the reinforcing warp threads (17) running through the second section (21) are respectively located in the same top shed or bottom shed and in accordance with the type of binding at least one portion of the binding warp threads (27) running through this second section (21) is located in the respective other shed,
as a result of which a reinforcement system (15) comprising reinforcing weft threads (16) and reinforcing warp threads (17) is formed, which are woven together in the first section and as a result of which in the second section (21) the reinforcing weft threads (16) are laid on the reinforcing warp threads (17) without a direct weave binding and are bound by a binding system (25) comprising binding weft threads (26) and binding warp threads (27).

13. Method for the production of a composite material element with the following steps:
• providing a textile part (10) according to one of claims I to 11,
• providing a plastic material (52),
• joining the textile part (10) to the plastic material (52) to form a plate-shaped composite material element (11).

14. Method according to claim 13, **characterised in that** the plane composite material element (11) is heated, is shaped in heated state into a three-dimensional composite material body (12) and is then cooled.

15. Method according to claim 13, **characterised in that** the textile part (10) is placed into a mould and draped, and plastic material is then injected into the mould.

## Revendications

1. Pièce textile (10) destinée à être utilisée dans des matériaux composites
comportant un système de renforcement (15) constitué de fils de chaîne de renforcement (17) et de fils de trame de renforcement (16),
doté d'au moins un premier segment (20) et d'au moins un deuxième segment (21),
les fils de chaîne de renforcement (17) et les fils de trame de renforcement (16) du premier segment (20) étant reliés directement les uns aux autres,
les fils de chaîne de renforcement (17) du deuxième segment (21) sont disposés contre les fils de trame de renforcement (16) sans liaison de tissage direct avec les fils de chaîne de renforcement (17),
**caractérisée en ce que** le deuxième segment (21) est limité sur plusieurs côtés par un ou plusieurs premiers segments (20) et n'est fixé ou stabilisé que par le premier segment (20) au moins unique et/ou **en ce que** le système de renforcement (15) du deuxième segment (21) est incorporé entre des fils de trame de liaison (26) et des fils de chaîne de liaison (27) d'un système de liaison (25), qui sont reliés entre eux à des emplacements de liaison (35).

2. Pièce textile (10) selon la revendication 1 **caractérisée en ce qu'**aux emplacements de liaison (35) du deuxième segment (21), dans chaque cas, deux fils de chaîne de liaison (27) immédiatement voisins forment un fil de chaîne à l'arrêt (36b) et un fil de chaîne de tour (36a), qui se croisent et **en ce qu'**un fil de trame de liaison (26) s'étend à l'emplacement de liaison (35) entre le fil de chaîne à l'arrêt (36b) et le fil de chaîne de tour (36a).

3. Pièce textile (10) selon la revendication 2 **caractérisée en ce que** le fil de chaîne à l'arrêt (36b) est formé par un fil de chaîne de renforcement (17) ou par un fil de chaîne de liaison (27) et **en ce que** le fil de chaîne de tour (36a) est formé par un fil de chaîne de liaison (27).

4. Pièce textile (10) selon la revendication 2 ou 3 **caractérisée en ce que** les emplacements de croisement entre le fil de chaîne à l'arrêt (36b) et le fil de chaîne de tour (36a) se situent à l'emplacement de liaison (35) avec le fil de trame de liaison (26).

5. Pièce textile (10) selon l'une des revendications qui précèdent **caractérisée en ce que** les fils de chaîne de liaison (26) et les fils de trame de liaison (27) du système de liaison (25) du premier segment (20) sont disposés sur un côté commun du système de renforcement (15).

6. Pièce textile (10) selon l'une des revendications qui précèdent **caractérisée en ce que** dans le premier segment (20) et/ou dans le deuxième segment (21), s'étendent, dans chaque cas, plusieurs fils de chaîne de renforcement (17) et plusieurs fils de trame de renforcement (16).

7. Pièce textile (10) selon l'une des revendications qui précèdent **caractérisée en ce que** le nombre des emplacements de croisement (22) du système de renforcement (15) du deuxième segment (21) est égal ou supérieur au nombre des emplacements de liaison (35) du système de liaison (25).

8. Pièce textile (10) selon l'une des revendications qui précèdent **caractérisée en ce que** les fils de chaîne de renforcement (17) et les fils de trame de renforcement (16) sont disposés de façon rectiligne dans le deuxième segment (21).

9. Pièce textile (10) selon l'une des revendications qui précèdent **caractérisée en ce que** le système de renforcement (15) est réalisé à partir d'un fil de renforcement (18) et **en ce que** le système de liaison (25) est réalisé à partir d'un fil de liaison (28), le fil de liaison (28) ayant une section plus faible, ou présentant un titre inférieur à celui du fil de renforcement (18).

10. Pièce textile (10) selon la revendication 9 **caractérisée en ce que** le fil de liaison (28) a une âme (29) et une gaine (30) qui entoure l'âme (29), l'âme (29) ayant une température de fusion supérieure à celle de la gaine (30).

11. Elément de matériau composite (11)
comportant une couche textile (13) qui présente un pièce textile (10) selon l'une des revendications qui précèdent,
et une matrice de matière de synthèse qui est reliée à la couche textile (13).

12. Procédé de fabrication d'une pièce textile (10) destinée à être utilisée dans des matériaux composites, comportant les opérations suivantes :
- Garnissage d'un métier à tisser mécanique (40) au moyen de fils de chaîne de renforcement (17) et de fils de chaîne de liaison (27) ainsi que de fils de trame de renforcement (16) et de fils de trame de liaison (26),
- Lancement des fils de trame de renforcement (16) et des fils de trame de liaison (26) dans un ordre préétabli,
une partie des fils de chaîne de renforcement (17) qui s'étendent dans un premier segment (20) se trouvant dans la foule supérieure et l'autre partie se trouvant dans la foule inférieure lors de l'introduction de la trame au moyen d'un fil de trame de renforcement (26), tous les fils de chaîne de renforcement (17) qui s'étendent dans un deuxième segment (21) se trouvant toujours dans la même foule, supérieure ou inférieure, lors de l'introduction de la trame au moyen d'un fil de trame de renforcement (16),
les fils de chaîne de renforcement (17) qui s'étendent dans le premier segment (20) lors de l'introduction de trame au moyen d'un fil de trame de liaison (26), se trouvant dans chaque cas dans la même foule, supérieure ou inférieure, et les fils de chaîne de renforcement (17) qui s'étendent dans le deuxième segment (21) se trouvant dans chaque cas dans la même foule, supérieure ou inférieure, lors de l'introduction de la trame au moyen d'un fil de trame de liaison (26), et au moins une partie des fils de chaîne de liaison (27) qui s'étendant dans ce deuxième segment (21), se trouvant dans chaque cas dans l'autre foule, en correspondance avec le mode de liaison,
un système de renforcement (15) constitué de fils de trame de renforcement (16) et de fils de chaîne de renforcement (17) étant réalisé, les fils de trame de renforcement (16) et les fils de chaîne de renforcement (17) étant tissés ensemble, et les fils de trame de renforcement (16) étant disposés sans liaison de tissage directe à côté des fils de chaîne de renforcement (17) et étant incorporés grâce à un système de liaison (25) constitué de fils de trame de liaison (26) et de fils de chaîne de liaison (27).

13. Procédé de fabrication d'un élément de matériau composite comportant les opérations suivantes :
- Préparation d'une pièce textile (10) selon une des revendications 1 à 11,
- Préparation d'un matériau de matière de synthèse (52),
- Liaison de la pièce textile (10) avec le matériau de matière de synthèse (52), en vue de réaliser un élément (11) de matériau composite en forme de plaque.

14. Procédé selon la revendication 13
**caractérisé en ce que** l'élément plan (11) de matériau composite est chauffé, transformé à l'état chauffé en un corps tridimensionnel (12) en matériau composite, puis refroidi.

15. Procédé selon la revendication 13
**caractérisé en ce que** la pièce textile (10) est mise en place dans un moule et drapé puis en ce qu'un matériau de matière de synthèse est injecté dans le moule.
